(19)

Europäisches
Patentamt
European
Patent Office
Office européen
des brevets

(11) **EP 4 554 219 A1**

(12) **EUROPEAN PATENT APPLICATION**
published in accordance with Art. 153(4) EPC

(43) Date of publication:
**14.05.2025 Bulletin 2025/20**

(21) Application number: 23835775.0

(22) Date of filing: **03.07.2023**

(51) International Patent Classification (IPC):
*H04N 19/513* (2014.01)    *H04N 19/105* (2014.01)
*H04N 19/176* (2014.01)    *H04N 19/132* (2014.01)
*H04N 19/139* (2014.01)

(52) Cooperative Patent Classification (CPC):
**H04N 19/105; H04N 19/132; H04N 19/139;**
**H04N 19/176; H04N 19/513**

(86) International application number:
**PCT/KR2023/009329**

(87) International publication number:
**WO 2024/010309 (11.01.2024 Gazette 2024/02)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **06.07.2022 US 202263358535 P**

(71) Applicant: **LG Electronics Inc.**
**Yeongdeungpo-gu**
**Seoul 07336 (KR)**

(72) Inventors:
• **PARK, Naeri**
**Seoul 06772 (KR)**
• **NAM, Junghak**
**Seoul 06772 (KR)**

(74) Representative: **Maikowski & Ninnemann**
**Patentanwälte Partnerschaft mbB**
**Postfach 15 09 20**
**10671 Berlin (DE)**

(54) **IMAGE ENCODING/DECODING METHOD AND DEVICE, AND RECORDING MEDIUM HAVING BITSTREAM STORED THEREIN**

(57)    An image encoding/decoding method and device according to the present disclosure may generate a candidate list of a current block and perform inter prediction of the current block on the basis of motion information of any one of multiple candidates belonging to the candidate list. The multiple candidates may include at least one of spatial candidates, temporal candidates, or derived candidates.

FIG.4

```
┌─────────────────────────────────┐
│      GENERATE CANDIDATE LIST     │
│  FOR MOTION INFORMATION PREDICTION│ ～ S400
│        OF CURRENT BLOCK          │
└─────────────────────────────────┘
                 │
                 ▼
┌─────────────────────────────────┐
│      DERIVE MOTION INFORMATION   │
│        OF CURRENT BLOCK          │ ～ S410
│ BASED ON CANDIDATE LIST AND CANDIDATE INDEX│
└─────────────────────────────────┘
                 │
                 ▼
┌─────────────────────────────────┐
│     PERFORM INTER PREDICTION     │
│        OF CURRENT BLOCK          │ ～ S420
│     BASED ON MOTION INFORMATION  │
└─────────────────────────────────┘
```

EP 4 554 219 A1

**Description**

[Technical Field]

The present disclosure relates to an image encoding/decoding method and apparatus, and a recording medium storing a bitstream.

[Background Art]

Recently, the demand for high-resolution and high-quality images such as HD (High Definition) images and UHD (Ultra High Definition) images has been increasing in various application fields, and accordingly, highly efficient image compression technologies are being discussed.

There are a variety of technologies such as inter-prediction technology that predicts a pixel value included in a current picture from a picture before or after a current picture with video compression technology, intra-prediction technology that predicts a pixel value included in a current picture by using pixel information in a current picture, entropy coding technology that allocates a short sign to a value with high appearance frequency and a long sign to a value with low appearance frequency, etc. and these image compression technologies may be used to effectively compress image data and transmit or store it.

[Disclosure]

[Technical Problem]

The present disclosure is to provide a method and a device for generating a variety of candidates of a candidate list for inter prediction.

The present disclosure is to provide a method and a device for deriving a candidate reflecting a motion at the bottom-right position of a current block.

The present disclosure is to provide a method and a device for deriving motion information of a temporal candidate.

The present disclosure is to provide a method and a device for adding various candidates to a candidate list.

[Technical Solution]

An image decoding method and device according to the present disclosure may generate a candidate list of a current block, derive motion information of the current block based on any one of a plurality of candidates belonging to the candidate list and perform inter prediction for the current block based on motion information of the current block. Here, the plurality of candidates may include at least one of a spatial candidate, a temporal candidate or a derived candidate.

In an image decoding method and device according to the present disclosure, motion information of the derived candidate may be derived based on at least one of a top-right block of the current block or a bottom-left block of the current block.

In an image decoding method and device according to the present disclosure, a top-right block of the current block may be a block including a top-right reference position and a bottom-left block of the current block may be a block including a bottom-left reference position. Here, the top-right reference position and the bottom-left reference position may be determined based on at least one of a width or a height of the current block.

In an image decoding method and device according to the present disclosure, a top-right block of the current block may be a block including a first position moved by a predetermined first distance in a left or right direction from a top-right reference position and a bottom-left block of the current block may be a block including a second position moved by a predetermined second distance in a bottom or top direction from a bottom-left reference position. Here, the first position and the second position may be positioned on the same straight line.

In an image decoding method and device according to the present disclosure, a top-right block of the current block may be a block including a first position moved by a predetermined distance in a left or right direction from a top-right reference position and a bottom-left block of the current block may be a block including a second position moved by the predetermined distance in a bottom or top direction from a bottom-left reference position.

In an image decoding method and device according to the present disclosure, the predetermined distance may be adaptively determined based on a size of the current block.

In an image decoding method and device according to the present disclosure, a search direction for determining at least one of the top-right block or the bottom-left block may be determined based on whether a width of the current block is greater than a height of the current block.

In an image decoding method and device according to the present disclosure, at least one of the top-right block or the bottom-left block may be determined by searching for an available block having motion information different from that of at least one of a left block or a top block of the current block.

In an image decoding method and device according to the present disclosure, a search range for determining at least one of the top-right block or the bottom-left block may be divided into a plurality of sub-ranges and the derived candidate may be derived for each of the plurality of sub-ranges.

In an image decoding method and device according to the present disclosure, the derived candidate may be adaptively added to the candidate list based on whether the temporal candidate is available for the current block.

In an image decoding method and device according to the present disclosure, the temporal candidate has motion information of a temporal neighboring block corresponding to the current block and the temporal neighboring block may be specified based on motion information derived based on at least one of the top-right block or the bottom-left block.

An image encoding method and device according to the present disclosure may generate a candidate list of a current block and perform inter prediction on the current block based on any one of a plurality of candidates belonging to the candidate list. Here, the plurality of candidates may include at least one of a spatial candidate, a temporal candidate or a derived candidate.

A computer-readable digital storage medium storing encoded video/image information that causes performing the image decoding method by a decoding apparatus according to the present disclosure is provided.

A computer-readable digital storage medium storing video/image information generated according to the image encoding method according to the present disclosure is provided.

A method and a device for transmitting video/image information generated according to an image encoding method according to the present disclosure are provided.

[Advantageous Effects]

According to the present disclosure, motion information within a current picture may be utilized to derive a candidate reflecting a motion at the bottom-right position of a current block, improving the accuracy and reliability of inter prediction.

According to the present disclosure, at least one of a plurality of derived candidates may be selectively used, improving the accuracy and reliability of inter prediction.

According to the present disclosure, the position of a temporal neighboring block for a temporal candidate may be adaptively determined, improving reliability for a temporal candidate and further, the accuracy of inter prediction.

[Description of Drawings]

FIG. 1 shows a video/image coding system according to the present disclosure.

FIG. 2 shows a schematic block diagram of an encoding apparatus to which an embodiment of the present disclosure is applicable and encoding of video/image signals is performed.

FIG. 3 shows a schematic block diagram of a decoding apparatus to which an embodiment of the present disclosure is applicable and decoding of video/image signals is performed.

FIG. 4 shows an inter prediction method performed by a decoding device as an embodiment according to the present disclosure.

FIG. 5 shows a schematic configuration of an inter predictor 332 performing an inter prediction method according to the present disclosure.

FIG. 6 shows an inter prediction method performed by an encoding device as an embodiment according to the present disclosure.

FIG. 7 shows a schematic configuration of an inter predictor 221 performing an inter prediction method according to the present disclosure.

FIG. 8 shows an example of a contents streaming system to which embodiments of the present disclosure may be applied.

[Best Mode]

Since the present disclosure may make various changes and have several embodiments, specific embodiments will be illustrated in a drawing and described in detail in a detailed description. However, it is not intended to limit the present disclosure to a specific embodiment, and should be understood to include all changes, equivalents and substitutes included in the spirit and technical scope of the present disclosure. While describing each drawing, similar reference numerals are used for similar components.

A term such as first, second, etc. may be used to describe various components, but the components should not be limited by the terms. The terms are used only to distinguish one component from other components. For example, a first component may be referred to as a second component without departing from the scope of a right of the present disclosure, and similarly, a second component may also be referred to as a first component. A term of and/or includes any of a plurality of related stated items or a combination of a plurality of related stated items.

When a component is referred to as "being connected" or "being linked" to another component, it should be understood that it may be directly connected or linked to another component, but another component may exist in the middle. On the other hand, when a component is referred to as "being directly connected" or "being directly linked" to another component, it should be understood that there is no another component in the middle.

A term used in this application is just used to describe a specific embodiment, and is not intended to limit the present disclosure. Singular expressions include plural expressions unless the context clearly dictates otherwise. In this application, it should be understood that a term such as "include" or "have", etc. is intended to designate the presence of features, numbers, steps, operations, components, parts or combinations thereof described in the specification, but does not exclude in advance the possibility of presence or addition of one or more other features, numbers, steps, operations, components, parts or combinations thereof.

The present disclosure relates to video/image coding. For example, a method/an embodiment disclosed herein may be applied to a method disclosed in the versatile video coding (VVC) standard. In addition, a method/an embodiment disclosed herein may be applied to a method disclosed in the essential video coding (EVC) standard, the AOMedia Video 1 (AV1) standard, the 2nd generation of audio video coding standard (AVS2) or the next-generation video/image coding standard (ex.H.267 or H.268, etc.).

This specification proposes various embodiments of video/image coding, and unless otherwise specified, the embodiments may be performed in combination with each other.

Herein, a video may refer to a set of a series of images over time. A picture generally refers to a unit representing one image in a specific time period, and a slice/a tile is a unit that forms part of a picture in coding. A slice/a tile may include at least one coding tree unit (CTU). One picture may consist of at least one slice/tile. One tile is a rectangular region composed of a plurality of CTUs within a specific tile column and a specific tile row of one picture. A tile column is a rectangular region of CTUs having the same height as that of a picture and a width designated by a syntax requirement of a picture parameter set. A tile row is a rectangular region of CTUs having a height designated by a picture parameter set and the same width as that of a picture. CTUs within one tile may be arranged consecutively according to CTU raster scan, while tiles within one picture may be arranged consecutively according to raster scan of a tile. One slice may include an integer number of complete tiles or an integer number of consecutive complete CTU rows within a tile of a picture that may be included exclusively in a single NAL unit. Meanwhile, one picture may be divided into at least two sub-pictures. A sub-picture may be a rectangular region of at least one slice within a picture.

A pixel, a pixel or a pel may refer to the minimum unit that constitutes one picture (or image). In addition, 'sample' may be used as a term corresponding to a pixel. A sample may generally represent a pixel or a pixel value, and may represent only a pixel/a pixel value of a luma component, or only a pixel/a pixel value of a chroma component.

A unit may represent a basic unit of image processing. A unit may include at least one of a specific region of a picture and information related to a corresponding region. One unit may include one luma block and two chroma (ex. cb, cr) blocks. In some cases, a unit may be used interchangeably with a term such as a block or an region, etc. In a general case, a MxN block may include a set (or an array) of transform coefficients or samples (or sample arrays) consisting of M columns and N rows.

Herein, "A or B" may refer to "only A", "only B" or "both A and B." In other words, herein, "A or B" may be interpreted as "A and/or B." For example, herein, "A, B or C" may refer to "only A", "only B", "only C" or "any combination of A, B and C)".

A slash (/) or a comma used herein may refer to "and/or." For example, "A/B" may refer to "A and/or B." Accordingly, "A/B" may refer to "only A", "only B" or "both A and B." For example, "A, B, C" may refer to "A, B, or C".

Herein, "at least one of A and B" may refer to "only A", "only B" or "both A and B". In addition, herein, an expression such as "at least one of A or B" or "at least one of A and/or B" may be interpreted in the same way as "at least one of A and B".

In addition, herein, "at least one of A, B and C" may refer to "only A", "only B", "only C", or "any combination of A, B and C". In addition, "at least one of A, B or C" or "at least one of A, B and/or C" may refer to "at least one of A, B and C".

In addition, a parenthesis used herein may refer to "for example." Specifically, when indicated as "prediction (intra prediction)", "intra prediction" may be proposed as an example of "prediction". In other words, "prediction" herein is not limited to "intra prediction" and "intra prediction" may be proposed as an example of "prediction." In addition, even when indicated as "prediction (i.e., intra prediction)", "intra prediction" may be proposed as an example of "prediction."

Herein, a technical feature described individually in one drawing may be implemented individually or simultaneously.

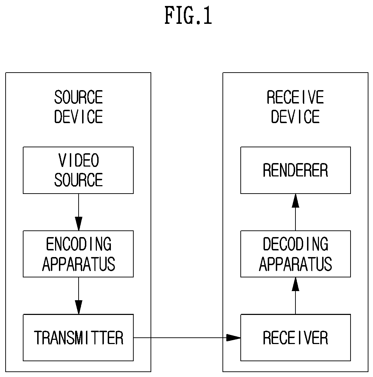

FIG. 1 shows a video/image coding system according to the present disclosure.

Referring to FIG. 1, a video/image coding system may include a first device (a source device) and a second device (a receiving device).

A source device may transmit encoded video/image information or data in a form of a file or streaming to a receiving device through a digital storage medium or a network. The source device may include a video source, an encoding apparatus and a transmission unit. The receiving device may include a reception unit, a decoding apparatus and a renderer. The encoding apparatus may be referred to as a video/image encoding apparatus and the decoding apparatus may be referred to as a video/image decoding apparatus. A transmitter may be included in an encoding apparatus. A receiver may be included in a decoding apparatus. A renderer may include a display unit, and a display unit may be composed of a separate device or an external component.

A video source may acquire a video/an image through a process of capturing, synthesizing or generating a video/an image. A video source may include a device of capturing a video/an image and a device of generating a video/an image. A device of capturing a video/an image may include at least one camera, a video/image archive including previously captured videos/images, etc. A device of generating a video/an image may include a computer, a tablet, a smartphone, etc. and may (electronically) generate a video/an image. For example, a virtual video/image may be generated through a computer, etc., and in this case, a process of capturing a video/an image may be replaced by a process of generating related data.

An encoding apparatus may encode an input video/image. An encoding apparatus may perform a series of procedures such as prediction, transform, quantization, etc. for compression and coding efficiency. Encoded data (encoded video/image information) may be output in a form of a bitstream.

A transmission unit may transmit encoded video/image information or data output in a form of a bitstream to a reception unit of a receiving device through a digital storage medium or a network in a form of a file or streaming. A digital storage medium may include various storage media such as USB, SD, CD, DVD, Blu-ray, HDD, SSD, etc. A transmission unit may include an element for generating a media file through a predetermined file format and may include an element for transmission through a broadcasting/communication network. A reception unit may receive/extract the bitstream and transmit it to a decoding apparatus.

A decoding apparatus may decode a video/an image by performing a series of procedures such as dequantization, inverse transform, prediction, etc. corresponding to an operation of an encoding apparatus.

A renderer may render a decoded video/image. A rendered video/image may be displayed through a display unit.

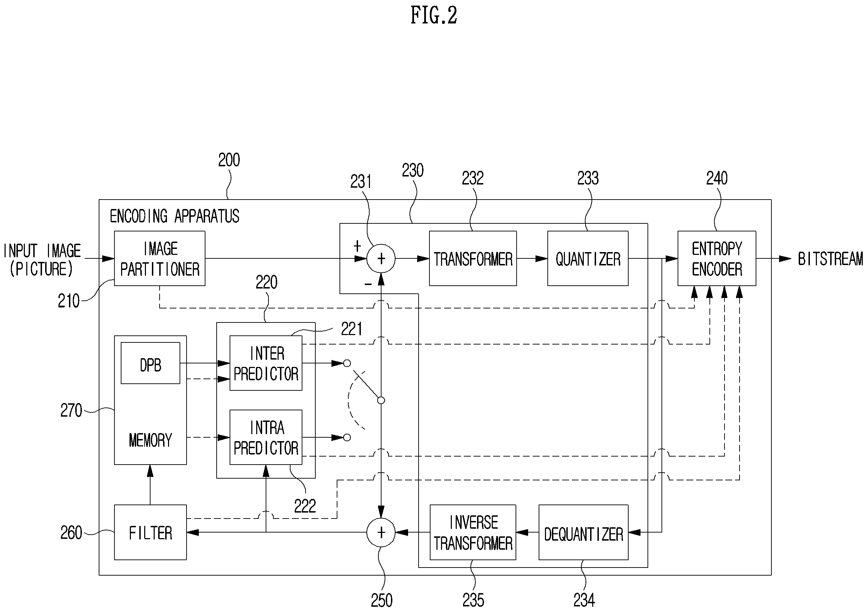

FIG. 2 shows a rough block diagram of an encoding apparatus to which an embodiment of the present disclosure may be applied and encoding of a video/image signal is performed.

Referring to FIG. 2, an encoding apparatus 200 may be composed of an image partitioner 210, a predictor 220, a residual processor 230, an entropy encoder 240, an adder 250, a filter 260 and a memory 270. A predictor 220 may include an inter predictor 221 and an intra predictor 222. A residual processor 230 may include a transformer 232, a quantizer 233, a dequantizer 234 and an inverse transformer 235. A residual processor 230 may further include a subtractor 231. An adder 250 may be referred to as a reconstructor or a reconstructed block generator. The above-described image partitioner 210, predictor 220, residual processor 230, entropy encoder 240, adder 250 and filter 260 may be configured by at least one hardware component (e.g., an encoder chipset or a processor) accorrding to an embodiment. In addition, a memory 270 may include a decoded picture buffer (DPB) and may be configured by a digital storage medium. The hardware component may further include a memory 270 as an internal/external component.

An image partitioner 210 may partition an input image (or picture, frame) input to an encoding apparatus 200 into at least one processing unit. As an example, the processing unit may be referred to as a coding unit (CU). In this case, a coding unit may be partitioned recursively according to a quad-tree binary-tree ternary-tree (QTBTTT) structure from a coding tree unit (CTU) or the largest coding unit (LCU).

For example, one coding unit may be partitioned into a plurality of coding units with a deeper depth based on a quad tree structure, a binary tree structure and/or a ternary structure. In this case, for example, a quad tree structure may be applied first and a binary tree structure and/or a ternary structure may be applied later. Alternatively, a binary tree structure may be applied before a quad tree structure. A coding procedure according to this specification may be performed based on a final coding unit that is no longer partitioned. In this case, based on coding efficiency, etc. according to an image characteristic, the largest coding unit may be directly used as a final coding unit, or if necessary, a coding unit may be recursively partitioned into coding units of a deeper depth, and a coding unit with an optimal size may be used as a final coding unit. Here, a coding procedure may include a procedure such as prediction, transform, and reconstruction, etc. described later.

As another example, the processing unit may further include a prediction unit (PU) or a transform unit (TU). In this case, the prediction unit and the transform unit may be divided or partitioned from a final coding unit described above, respectively. The prediction unit may be a unit of sample prediction, and the transform unit may be a unit for deriving a transform coefficient and/or a unit for deriving a residual signal from a transform coefficient.

In some cases, a unit may be used interchangeably with a term such as a block or an region, etc. In a general case, a MxN block may represent a set of transform coefficients or samples consisting of M columns and N rows. A sample may generally represent a pixel or a pixel value, and may represent only a pixel/a pixel value of a luma component, or only a pixel/a pixel value of a chroma component. A sample may be used as a term that makes one picture (or image) correspond to a pixel or a pel.

An encoding apparatus 200 may subtract a prediction signal (a prediction block, a prediction sample array) output from an inter predictor 221 or an intra predictor 222 from an input image signal (an original block, an original sample array) to generate a residual signal (a residual signal, a residual sample array), and a generated residual signal is transmitted to a transformer 232. In this case, a unit that subtracts a prediction signal (a prediction block, a prediction sample array) from an input image signal (an original block, an original sample array) within an encoding apparatus 200 may be referred to as a subtractor 231.

A predictor 220 may perform prediction on a block to be processed (hereinafter, referred to as a current block) and generate a predicted block including prediction samples for the current block. A predictor 220 may determine whether intra prediction or inter prediction is applied in a unit of a current block or a CU. A predictor 220 may generate various information on prediction such as prediction mode information, etc. and transmit it to an entropy encoder 240 as described later in a description of each prediction mode. Information on prediction may be encoded in an entropy encoder 240 and output in a form of a bitstream.

An intra predictor 222 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. A nondirectional mode may include at least one of a DC mode or a planar mode. A directional mode may include 33 directional modes or 65 directional modes according to a detail level of a prediction direction. However, it is an example, and more or less directional modes may be used according to a configuration. An intra predictor 222 may determine a prediction mode applied to a current block by using a prediction mode applied to a neighboring block.

An inter predictor 221 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. A reference picture including the reference block and a reference picture including the temporal neighboring block may be the same or different. The temporal neighboring block may be referred to as a collocated reference block, a collocated CU (colCU), etc., and a reference picture including the temporal neighboring block may be referred to as a collocated picture (colPic). For example, an inter predictor 221 may configure a motion information candidate list based on neighboring blocks and generate information indicating which candidate is used to derive a motion vector and/or a reference picture index of the current block. Inter prediction may be performed based on various prediction modes, and for example, for a skip mode and a merge mode, an inter predictor 221 may use motion information of a neighboring block as motion information of a current block. For a skip mode, unlike a merge mode, a residual signal may not be transmitted. For a motion vector prediction (MVP) mode, a motion vector of a neighboring block is used as a motion vector predictor and a motion vector difference is signaled to indicate a motion vector of a current block.

A predictor 220 may generate a prediction signal based on various prediction methods described later. For example, a predictor may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, a sample value within a picture may be signaled based on information on a palette table and a palette index. A prediction signal generated through the predictor 220 may be used to generate a reconstructed signal or a residual signal.

A transformer 232 may generate transform coefficients by applying a transform technique to a residual signal. For example, a transform technique may include at least one of Discrete Cosine Transform (DCT), Discrete Sine Transform (DST), Karhunen-Loève Transform (KLT), Graph-Based Transform (GBT) or Conditionally Non-linear Transform (CNT). Here, GBT refers to transform obtained from this graph when relationship information between pixels is expressed as a graph. CNT refers to transform obtained based on generating a prediction signal by using all previously reconstructed pixels. In addition, a transform process may be applied to a square pixel block in the same size or may be applied to a non-square block in a variable size.

A quantizer 233 may quantize transform coefficients and transmit them to an entropy encoder 240 and an entropy encoder 240 may encode a quantized signal (information on quantized transform coefficients) and output it as a bitstream. Information on the quantized transform coefficients may be referred to as residual information. A quantizer 233 may rearrange quantized transform coefficients in a block form into an one-dimensional vector form based on coefficient scan order, and may generate information on the quantized transform coefficients based on the quantized transform coefficients in the one-dimensional vector form.

An entropy encoder 240 may perform various encoding methods such as exponential Golomb, context-adaptive variable length coding (CAVLC), context-adaptive binary arithmetic coding (CABAC), etc. An entropy encoder 240 may encode information necessary for video/image reconstruction (e.g., a value of syntax elements, etc.) other than quantized transform coefficients together or separately.

Encoded information (ex. encoded video/image information) may be transmitted or stored in a unit of a network abstraction layer (NAL) unit in a bitstream form. . The video/image information may further include information on various parameter sets such as an adaptation parameter set (APS), a picture parameter set (PPS), a sequence parameter set (SPS) or a video parameter set (VPS), etc. In addition, the video/image information may further include general constraint information. Herein, information and/or syntax elements transmitted/signaled from an encoding apparatus to a decoding apparatus may be included in video/image information. The video/image information may be encoded through the above-described encoding procedure and included in the bitstream. The bitstream may be transmitted through a network or may be stored in a digital storage medium. Here, a network may include a broadcasting network and/or a communication network, etc. and a digital storage medium may include various storage media such as USB, SD, CD, DVD, Blu-ray, HDD, SSD, etc. A transmission unit (not shown) for transmitting and/or a storage unit (not shown) for storing a signal output from an entropy encoder 240 may be configured as an internal/external element of an encoding apparatus 200, or a transmission unit may be also included in an entropy encoder 240.

Quantized transform coefficients output from a quantizer 233 may be used to generate a prediction signal. For example, a residual signal (a residual block or residual samples) may be reconstructed by applying dequantization and inverse transform to quantized transform coefficients through a dequantizer 234 and an inverse transformer 235. An adder 250 may add a reconstructed residual signal to a prediction signal output from an inter predictor 221 or an intra predictor 222 to generate a reconstructed signal (a reconstructed picture, a reconstructed block, a reconstructed sample array). When there is no residual for a block to be processed like when a skip mode is applied, a predicted block may be used as a reconstructed block. An adder 250 may be referred to as a reconstructor or a reconstructed block generator. A generated reconstructed signal may be used for intra prediction of a next block to be processed within a current picture, and may be also used for inter prediction of a next picture through filtering as described later. Meanwhile, luma mapping with chroma scaling (LMCS) may be applied in a picture encoding and/or reconstruction process.

A filter 260 may improve subjective/objective image quality by applying filtering to a reconstructed signal. For example, a filter 260 may generate a modified reconstructed picture by applying various filtering methods to a reconstructed picture, and may store the modified reconstructed picture in a memory 270, specifically in a DPB of a memory 270. The various filtering methods may include deblocking filtering, sample adaptive offset, adaptive loop filter, bilateral filter, etc. A filter 260 may generate various information on filtering and transmit it to an entropy encoder 240. Information on filtering may be encoded in an entropy encoder 240 and output in a form of a bitstream.

A modified reconstructed picture transmitted to a memory 270 may be used as a reference picture in an inter predictpr 221. When inter prediction is applied through it, an encoding apparatus may avoid prediction mismatch in an encoding apparatus 200 and a decoding apparatus, and may also improve encoding efficiency.

A DPB of a memory 270 may store a modified reconstructed picture to use it as a reference picture in an inter predictor 221. A memory 270 may store motion information of a block from which motion information in a current picture is derived (or encoded) and/or motion information of blocks in a pre-reconstructed picture. The stored motion information may be transmitted to an inter predictor 221 to be used as motion information of a spatial neighboring block or motion information of a temporal neighboring block. A memory 270 may store reconstructed samples of reconstructed blocks in a current picture and transmit them to an intra predictor 222.

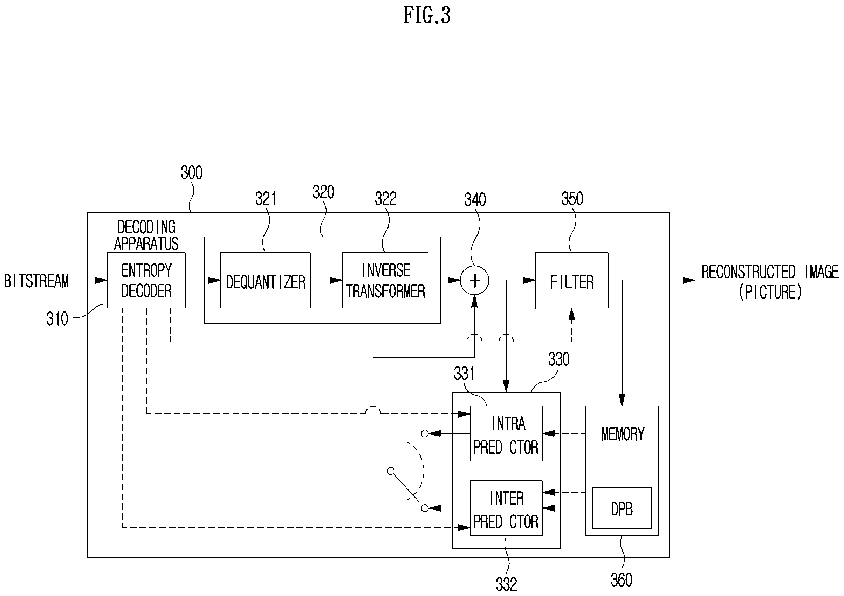

FIG. 3 shows a rough block diagram of a decoding apparatus to which an embodiment of the present disclosure may be applied and decoding of a video/image signal is performed.

Referring to FIG. 3, a decoding apparatus 300 may be configured by including an entropy decoder 310, a residual processor 320, a predictor 330, an adder 340, a filter 350 and a memory 360. A predictor 330 may include an inter predictor 331 and an intra predictor 332. A residual processor 320 may include a dequantizer 321 and an inverse transformer 321.

According to an embodiment, the above-described entropy decoder 310, residual processor 320, predictor 330, adder 340 and filter 350 may be configured by one hardware component (e.g., a decoder chipset or a processor). In addition, a memory 360 may include a decoded picture buffer (DPB) and may be configured by a digital storage medium. The hardware component may further include a memory 360 as an internal/external component.

When a bitstream including video/image information is input, a decoding apparatus 300 may reconstruct an image in response to a process in which video/image information is processed in an encoding apparatus of FIG. 2. For example, a decoding apparatus 300 may derive units/blocks based on block partition-related information obtained from the bitstream. A decoding apparatus 300 may perform decoding by using a processing unit applied in an encoding apparatus. Accordingly, a processing unit of decoding may be a coding unit, and a coding unit may be partitioned from a coding tree unit or the large coding unit according to a quad tree structure, a binary tree structure and/or a ternary tree structure. At least one transform unit may be derived from a coding unit. And, a reconstructed image signal decoded and output through a decoding apparatus 300 may be played through a playback device.

A decoding apparatus 300 may receive a signal output from an encoding apparatus of FIG. 2 in a form of a bitstream, and a received signal may be decoded through an entropy decoder 310. For example, an entropy decoder 310 may parse the bitstream to derive information (ex. video/image information) necessary for image reconstruction (or picture reconstruction). The video/image information may further include information on various parameter sets such as an adaptation parameter set (APS), a picture parameter set (PPS), a sequence parameter set (SPS) or a video parameter set (VPS), etc. In addition, the video/image information may further include general constraint information. A decoding apparatus may decode a picture further based on information on the parameter set and/or the general constraint information. Signaled/received information and/or syntax elements described later herein may be decoded through the decoding procedure and obtained from the bitstream. For example, an entropy decoder 310 may decode information in a bitstream based on a coding method such as exponential Golomb encoding, CAVLC, CABAC, etc. and output a value of a syntax element necessary for image reconstruction and quantized values of a transform coefficient regarding a residual. In more detail, a CABAC entropy decoding method may receive a bin corresponding to each syntax element from a bitstream, determine a context model by using syntax element information to be decoded, decoding information of a neighboring block and a block to be decoded or information of a symbol/a bin decoded in a previous step, perform arithmetic decoding of a bin by predicting a probability of occurrence of a bin according to a determined context model and generate a symbol corresponding to a value of each syntax element. In this case, a CABAC entropy decoding method may update a context model by using information on a decoded symbol/bin for a context model of a next symbol/bin after determining a context model. Among information decoded in an entropy decoder 310, information on prediction is provided to a predictor (an inter predictor 332 and an intra predictor 331), and a residual value on which entropy decoding was performed in an entropy decoder 310, i.e., quantized transform coefficients and related parameter information may be input to a residual processor 320. A residual processor 320 may derive a residual signal (a residual block, residual samples, a residual sample array). In addition, information on filtering among information decoded in an entropy decoder 310 may be provided to a filter 350. Meanwhile, a reception unit (not shown) that receives a signal output from an encoding apparatus may be further configured as an internal/external element of a decoding apparatus 300 or a reception unit may be a component of an entropy decoder 310.

Meanwhile, a decoding apparatus according to this specification may be referred to as a video/image/picture decoding apparatus, and the decoding apparatus may be divided into an information decoder (a video/image/picture information decoder) and a sample decoder (a video/image/picture sample decoder). The information decoder may include the entropy decoder 310 and the sample decoder may include at least one of dequantizer 321, the inverse transformer 322, the adder 340, the filter 350, the memory 360, the inter predictor 332 and the intra predictor 331.

A dequantizer 321 may dequantize quantized transform coefficients and output transform coefficients. A dequantizer 321 may rearrange quantized transform coefficients into a two-dimensional block form. In this case, the rearrangement may be performed based on coefficient scan order performed in an encoding apparatus. A dequantizer 321 may perform dequantization on quantized transform coefficients by using a quantization parameter (e.g., quantization step size information) and obtain transform coefficients.

An inverse transformer 322 inversely transforms transform coefficients to obtain a residual signal (a residual block, a residual sample array).

A predictor 320 may perform prediction on a current block and generate a predicted block including prediction samples for the current block. A predictor 320 may determine whether intra prediction or inter prediction is applied to the current block based on the information on prediction output from an entropy decoder 310 and determine a specific intra/inter prediction mode.

A predictor 320 may generate a prediction signal based on various prediction methods described later. For example, a predictor 320 may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, information on a palette table and a palette index may be included in the video/image information and signaled.

An intra predictor 331 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. An intra predictor 331 may determine a prediction mode applied to a current block by using a prediction mode applied to a neighboring block.

An inter predictor 332 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. For example, an inter predictor 332 may configure a motion information candidate list based on neighboring blocks and derive a motion vector and/or a reference picture index of the current block based on received candidate selection information. Inter prediction may be performed based on various prediction modes, and the information on prediction may include information indicating an inter prediction mode for the current block.

An adder 340 may add an obtained residual signal to a prediction signal (a prediction block, a prediction sample array) output from a predictor (including an inter predictor 332 and/or an intra predictor 331) to generate a reconstructed signal (a reconstructed picture, a reconstructed block, a reconstructed sample array). When there is no residual for a block to be processed like when a skip mode is applied, a prediction block may be used as a reconstructed block.

An adder 340 may be referred to as a reconstructor or a reconstructed block generator. A generated reconstructed signal may be used for intra prediction of a next block to be processed in a current picture, may be output through filtering as described later or may be used for inter prediction of a next picture. Meanwhile, luma mapping with chroma scaling (LMCS) may be applied in a picture decoding process.

A filter 350 may improve subjective/objective image quality by applying filtering to a reconstructed signal. For example, a filter 350 may generate a modified reconstructed picture by applying various filtering methods to a reconstructed picture and transmit the modified reconstructed picture to a memory 360, specifically a DPB of a memory 360. The various filtering methods may include deblocking filtering, sample adaptive offset, adaptive loop filter, bilateral filter, etc.

The (modified) reconstructed picture stored in the DPB of the memory 360 can be used as a reference picture in the inter predictor 332. A memory 360 may store motion information of a block from which motion information in a current picture is derived (or decoded) and/or motion information of blocks in a pre-reconstructed picture. The stored motion information may be transmitted to an inter predictor 260 to be used as motion information of a spatial neighboring block or motion information of a temporal neighboring block. A memory 360 may store reconstructed samples of reconstructed blocks in a current picture and transmit them to an intra predictor 331.

Herein, embodiments described in a filter 260, an inter predictor 221 and an intra predictor 222 of an encoding apparatus 200 may be also applied equally or correspondingly to a filter 350, an inter predictor 332 and an intra predictor 331 of a decoding apparatus 300, respectively.

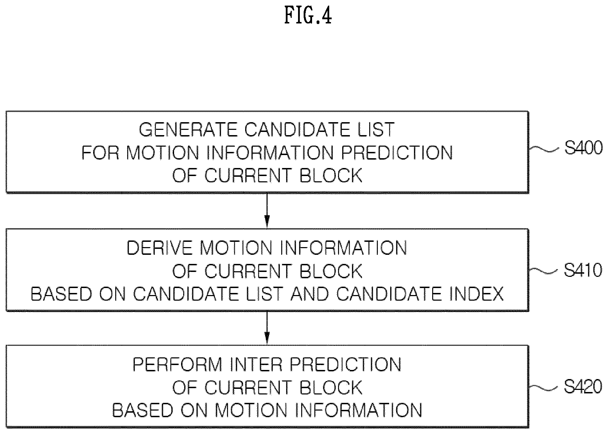

FIG. 4 shows an inter prediction method performed by a decoding device as an embodiment according to the present disclosure.

Referring to FIG. 4, a candidate list for predicting motion information of a current block may be generated S400.

The candidate list may be for a merge mode or an advanced motion vector prediction (AMVP) mode. However, it is not limited thereto, and the candidate list may be for an affine merge mode or an affine inter mode.

The motion information may include at least one of a motion vector, a reference picture index, inter prediction direction information or weight information for bidirectional weighted prediction.

The candidate list may include at least one of a spatial candidate, a temporal candidate, a derived candidate or a history-based candidate.

A spatial candidate may be derived based on motion information of a neighboring block spatially adjacent to a current block (hereinafter, referred to as a spatial neighboring block). A spatial neighboring block may include at least one of a top neighboring block, a left neighboring block, a bottom-left neighboring block, a top-right neighboring block or a top-left neighboring block of a current block.

Alternatively, a spatial candidate may be derived based on motion information of a non-adjacent block. Here, a non-adjacent block is a block decoded before a current block, and may refer to a block that belongs to the same picture as a current block, but is not adjacent to a current block. The non-adjacent block may be a block at a position K-sample units away from a current block in at least one of vertical, horizontal or diagonal directions. Here, K may be an integer of 4, 8, 16, 32 or more.

A temporal candidate may be derived based on motion information of a neighboring block temporally adjacent to a current block (hereinafter, referred to as a temporal neighboring block). A temporal neighboring block may be a block that belongs to a reference picture decoded before a current picture (a collocated picture) and is positioned at the same position as a current block. A block at the same position may be a block that includes the position of a top-left sample of a current block, the position of a center sample or the position of a sample adjacent to the bottom-right corner of a current block. Alternatively, a temporal neighboring block may refer to a block at a position shifted by a predetermined disparity vector from a block at the same position.

The disparity vector may be the motion vector of a specific block that is pre-defined equally for an encoding device and a decoding device. As an example, a pre-defined specific block may be any one of the left neighboring block, the top neighboring block, the top-left neighboring block, the top-right neighboring block or the bottom-left neighboring block of a current block. However, when the motion vector of the specific block is not available, the disparity vector may be derived based on a motion vector corresponding to the bottom-right position of a current block (or the motion vector of a derived candidate). A method for deriving a motion vector corresponding to the bottom-right position of a current block is the same as described below, and a detailed description is omitted here.

Alternatively, the disparity vector may be determined as any one of a plurality of motion vector candidates belonging to a motion vector candidate list. The plurality of motion vector candidates may include at least one of the motion vector of a spatial neighboring block described above or a motion vector corresponding to the bottom-right position of a current block described below (or the motion vector of a derived candidate).

The above-described temporal candidate is available only when temporal_mvp_enabled_flag signaled in a high-level syntax such as a sequence parameter set (SPS), a picture parameter set (PPS), a picture header (PH), a slice header (SH), etc. is TRUE, and may not be used when motion information of a block at the same position is not available. In addition, since the reliability of motion information in a current picture is higher than motion information in a reference picture, a method for deriving a candidate (hereinafter, referred to as a derived candidate) reflecting a motion at the bottom-right position of a current block from motion information of a specific block of a current block is described.

A derived candidate may be derived based on motion information of at least one of the top-right block or the bottom-left block of a current block.

Method 1 for determining top-right/bottom-left blocks

The top-right block of a current block may be a coding block including a sample at a top-right reference position or a sub-block having a predetermined size. Here, a sub-block may be any one of the sub-blocks within a coding block partitioned in a predetermined size and a predetermined size may be 2x2, 2x4, 4x2, 4x4 or more. A sub-block in an embodiment described below may also be understood to have the same meaning. Similarly, the bottom-left block of a current block may be a coding block including a sample at a bottom-left reference position or a sub-block having a predetermined size.

When it is assumed that the position of a top-left sample of a current block is (0, 0), the top-right reference position and the bottom-left reference position may be defined as (N*W, -1) and (-1, N*H), respectively. Here, W and H may refer to the width and height of a current block, respectively, and N may be at least one integer in a range of 1 to 32. However, it is not limited thereto, and N may be at least one integer in a range of -32 to 0.

For convenience of a description, it is assumed that N is 2. In this case, motion information of a derived candidate may be derived based on a top-right block including the top-right reference position of (2W, -1) and a bottom-left block including the bottom-left reference position of (-1, 2H). As an example, motion information of a derived candidate may be derived as in Equation 1 below.

$$[\text{Equation 1}]$$
$$MV_{RB}(x) = (W * MV_{RT}(x) + W * MV_{LB}(x)) / 2W$$
$$MV_{RB}(y) = (H * MV_{RT}(y) + H * MV_{LB}(y)) / 2H$$

In Equation 1, $MV_{RT}(x)$ may refer to the motion vector of a x-component of a top-right block including the top-right reference position of (2W, -1) and $MV_{RT}(y)$ may refer to the motion vector of a y-component of a top-right block including the top-right reference position of (2W, -1). $MV_{LB}(x)$ may refer to the motion vector of a x-component of a bottom-left block including the bottom-left reference position of (-1, 2H) and $MV_{LB}(y)$ may refer to the motion vector of a y-component of a bottom-left block including the bottom-left reference position of (-1, 2H). $MV_{RB}(x)$ and $MV_{RB}(y)$ are a motion vector corresponding to the bottom-right position of a current block, which may be used as the motion vector of a derived candidate. As in Equation 1, a horizontal distance (W) between a current block and a top-right block and a vertical distance (H) between a current block and a bottom-left block may be considered to calculate the motion vector of a derived candidate.

The top-right/bottom-left reference position may be applied equally not only when a current block is square, but also when a current block is non-square. In other words, even when the width of a current block is greater than a height or the width of a current block is less than a height, a top-right reference position and a bottom-left reference position may be defined as (N*W, -1) and (-1, N*H), respectively.

Alternatively, according to whether a current block is square, top-right/bottom-left reference positions may be defined differently. As an example, when a current block is square, as described above, a top-right reference position and a bottom-left reference position may be defined as (N*W, -1) and (-1, N*H), respectively. On the other hand, when a current block is non-square, a top-right reference position and a bottom-left reference position may be defined as (M* (W+H), -1) and (-1, M* (W+H)), respectively. Here, W and H may refer to the width and height of a current block, respectively, and M may be at least one integer in a range of 1 to 16. However, it is not limited thereto, and M may also be at least one integer in a range of -16 to 0.

For convenience of a description, it is assumed that M is 1. In this case, motion information of a derived candidate may be derived based on a top-right block including the top-right reference position of ((W+H), -1) and a bottom-left block including the bottom-left reference position of (-1, (W+H)). As an example, motion information of a derived candidate may be derived as in Equation 2 below.

[Equation 2]

$$MV_{RB}(x) = (W * MV_{RT}(x) + H * MV_{LB}(x)) / (W + H)$$

$$MV_{RB}(y) = (W * MV_{RT}(y) + H * MV_{LB}(y)) / (W + H)$$

In Equation 2, $MV_{RT}(x)$ may refer to the motion vector of a x-component of a top-right block including the top-right reference position of ((W+H), -1) and $MV_{RT}(y)$ may refer to the motion vector of a y-component of a top-right block including the top-right reference position of ((W+H), - 1). $MV_{LB}(x)$ may refer to the motion vector of a x-component of a bottom-left block including the bottom-left reference position of (-1, (W+H)) and $MV_{LB}(y)$ may refer to the motion vector of a y-component of a bottom-left block including the bottom-left reference position of (-1, (W+H)). $MV_{RB}(x)$ and $MV_{RB}(y)$ are a motion vector corresponding to the bottom-right position of a current block, which may be used as the motion vector of a derived candidate. As in Equation 2, in order to calculate the motion vector of a derived candidate, a horizontal distance (H) between a current block and a top-right block and a vertical distance (W) between a current block and a bottom-left block may be considered.

A range of N and M described above may be variably determined according to a region to which a current block may refer. As an example, a region to which a current block may refer may be limited to one coding tree unit (CTU) to which a current block belongs. In this case, when the size of a CTU is 128x128 and the size of a current block is 4x4, N may be at least one integer in a range of 1 to 31.

Method 2 for determining top-right/bottom-left blocks

The top-right block of a current block may be a coding block or a sub-block including a position (hereinafter, referred to as a RT position) moved by a predetermined distance ($\alpha$) in a left or right direction from a top-right reference position described above. The $\alpha$ may be an integer of 4, 8, 16, 32 or more. The $\alpha$ may be a value that is pre-defined equally for an encoding device and a decoding device. Alternatively, the $\alpha$ may be variably determined based on at least one of the size of a current block (e.g., a width, a height, the ratio of a width and a height, the product of a width and a height, etc.), whether a current block is square, whether a current block touches the boundary of a CTU or the position of a current block within a CTU. As an example, when the size of a current block is less than 32x32, $\alpha$ may be configured as 4, and when the size of a current block is greater than or equal to 32x32, $\alpha$ may be configured as 8. Meanwhile, the bottom-left block of a current block may be determined dependently on the position of a top-right block of a current block. The bottom-left block of a current block may be a coding block or a sub-block including a position (hereinafter, referred to as a LB position) moved by a predetermined distance in a bottom or top direction from a bottom-left reference position described above in response to the RT position. In this case, a LB position corresponding to a RT position may be determined to be positioned on a straight line passing through a RT position and the bottom-right position of a current block.

As an example, when it is moved by a predetermined distance ($\alpha$) in a left direction from the top-right reference position of (2W, -1), the equation of a straight line passing through a RT position, the bottom-right position of a current block and a LB position described above may be expressed as in Equation 3 below.

[Equation 3]

$$y = -\frac{H + 1}{(W - \alpha)}x + \frac{(2W - \alpha)H + W}{(W - \alpha)}$$

The RT position is variably determined according to the value of $\alpha$, and may be defined as (2W-$\alpha$, -1), and a LB position may be calculated by using the equation of a straight line that is changed according to the value of $\alpha$. When the size of a current block is 8x8 and the value of $\alpha$ is 4, a RT position and a LB position may be determined as (12, -1) and (-1, 28), respectively.

Alternatively, for convenience of calculation, a top-right reference position and a bottom-left reference position may be simplified as (2W, 0) and (0, 2H), respectively, and in this case, the equation of a straight line in Equation 3 may be changed as in Equation 4.

[Equation 4]

$$y = -\frac{H}{(W-\alpha)}x + \frac{(2W-\alpha)H}{(W-\alpha)}$$

When Equation 4 is used, an initial RT position may be determined as (12, 0) and an initial LB position may be determined as (0, 24) under the same condition. Based on initial RT/LB positions, a final RT position and a final LB position may be determined as (12, -1) and (-1, 24), respectively.

Alternatively, the bottom-left block of a current block may be a coding block or a sub-block including a position (hereinafter, referred to as a LB position) moved by a predetermined distance ($\beta$) in a top or bottom direction from a bottom-left reference position described above. The $\beta$ may be an integer of 4, 8, 16, 32 or more. The $\beta$ may be a value that is pre-defined equally for an encoding device and a decoding device. Alternatively, the $\beta$ may be variably determined based on at least one of the size of a current block (e.g., a width, a height, the ratio of a width and a height, the product of a width and a height, etc.), whether a current block is square, whether a current block touches the boundary of a CTU or the position of a current block within a CTU. The $\beta$ may be a different value from $\alpha$ described above. Meanwhile, the top-right block of a current block may be determined dependently on the position of a bottom-left block of a current block. The top-right block of a current block may be a coding block or a sub-block including a position (hereinafter, referred to as a RT position) moved by a predetermined distance in a right or left direction from a top-right reference position described above in response to the LB position. In this case, a RT position corresponding to a LB position may be determined to be positioned on a straight line passing through a LB position and the bottom-right position of a current block.

Method 3 for determining top-right/bottom-left blocks

The top-right block of a current block may be determined by searching for an available block within a predetermined search range. The search range may be from the top-right position of a current block (e.g., (W, -1)) to a top-right reference position. Specifically, while moving by a predetermined distance ($\alpha$), it is possible to check whether a coding block or a sub-block including a moving position is available. Here, a predetermined distance ($\alpha$) is the same as described in 'Method 2 for determining top-right/bottom-left blocks'. An available block found first in the search process may be configured as the top-right block of a current block. In this case, the search may be performed in a right direction from the top-right position of a current block or may be performed in a left direction from the top-right reference position of a current block. Meanwhile, the bottom-left block of a current block may be determined dependently on the position of a pre-determined top-right block, which is the same as described in 'Method 2 for determining top-right/bottom-left blocks'.

Alternatively, the bottom-left block of a current block may be determined by searching for an available block within a predetermined search range. The search range may be from the bottom-left position of a current block (e.g., (-1, H)) to a bottom-left reference position. Specifically, while moving by a predetermined distance ($\beta$), it is possible to check whether a coding block or a sub-block including a moving position is available. Here, a predetermined distance ($\beta$) is the same as described in 'Method 2 for determining top-right/bottom-left blocks'. An available block found first in the search process may be configured as the bottom-left block of a current block. In this case, the search may be performed in a bottom direction from the bottom-left position of a current block or may be performed in a top direction from the bottom-left reference position of a current block. Meanwhile, the top-right block of a current block may be determined dependently on the position of a pre-determined bottom-left block, which is the same as described in 'Method 2 for determining top-right/bottom-left blocks'.

Method 4 for determining top-right/bottom-left blocks

The top-right block and the bottom-left block of a current block may be a coding block or a sub-block including a position moved by a predetermined distance ($\alpha$) from a top-right reference position and a bottom-left reference position described above, respectively. Specifically, the top-right block of a current block may be a coding block or a sub-block including a position moved by a predetermined distance ($\alpha$) to the left or right from a top-right reference position, and the bottom-left block of a current block may be a coding block or a sub-block including a position moved by a predetermined distance ($\alpha$) to the bottom or top from a bottom-left reference position. Here, a predetermined distance ($\alpha$) is the same as described in 'Method 2 for determining top-right/bottom-left blocks'.

Method 5 for determining top-right/bottom-left blocks

The top-right block of a current block may be determined by searching for an available block in a left or right direction from a predetermined search start position. The search start position may be the top-right reference position and/or the top-right position of a current block. Specifically, while moving by a predetermined distance ($\alpha$) from the search start position, it is possible to check whether a coding block or a sub-block including a moving position is available. Here, a predetermined distance ($\alpha$) is the same as described in 'Method 2 for determining top-right/bottom-left blocks'. An available block found first in the search process may be configured as the top-right block of a current block.

Meanwhile, the bottom-left block of a current block may be determined by searching for an available block in a bottom or top direction from a predetermined search start position. The search start position may be the bottom-left reference position and/or the bottom-left position of a current block. Specifically, while moving by the same distance ($\alpha$) from the search start position, it is possible to check whether a coding block or a sub-block including a moving position is available. An available block found first in the search process may be configured as the bottom-left block of a current block.

The search direction may be pre-defined equally for an encoding device and a decoding device. As an example, a search direction for a top-right block may be a left direction from a top-right reference position, and a search direction for a bottom-left block may be a bottom direction from a bottom-left reference position or a bottom-left position. Alternatively, a search direction for a top-right block may be a right direction from a top-right reference position or a top-right position, and a search direction for a bottom-left block may be a top direction from a bottom-left reference position.

Alternatively, the search direction may vary depending on the size and/or shape of a current block. As an example, when the width of a current block is smaller than a height, a search direction for a top-right block may be a right direction from a top-right reference position, and a search direction for a bottom-left block may be a top direction from a bottom-left reference position. Conversely, when the width of a current block is greater than a height, a search direction for a top-right block may be a left direction from a top-right reference position, and a search direction for a bottom-left block may be a bottom direction from a bottom-left reference position.

In determining the top-right/bottom-left block of a current block, a different method may be applied. As an example, a top-right block may be determined based on any one of the methods 1 to 5 for determining top-right/bottom-left blocks, and a bottom-left block may be determined based on another one of the methods 1 to 5 for determining top-right/bottom-left blocks.

A top-right/bottom-left block may be determined through at least one of the above-described methods for determining top-right/bottom-left blocks. Based on at least one of the position or motion information of the determined top-right/bottom-left block, motion information corresponding to the bottom-right position of a current block may be derived, which may be used as motion information of a derived candidate.

As an example, a motion vector corresponding to the bottom-right position of a current block may be derived as in Equation 5 below.

$$[Equation\ 5]$$

$$MV_{RB}(x) = (dx0 * MV_{RT}(x) + dx1 * MV_{LB}(x)) / (dx0 + dx1)$$

$$MV_{RB}(y) = (dy1 * MV_{RT}(y) + dy0 * MV_{LB}(y)) / (dy1 + dy0)$$

In Equation 5, $MV_{RT}(x)$ may refer to the motion vector of a x-component of a top-right block, and $MV_{RT}(y)$ may refer to the motion vector of a y-component of a top-right block. $MV_{LB}(x)$ may refer to the motion vector of a x-component of a bottom-left block, and $MV_{LB}(y)$ may refer to the motion vector of a y-component of a bottom-left block. $MV_{RB}(x)$ may refer to the motion vector of a x-component corresponding to the bottom-right position of a current block, and $MV_{RB}(y)$ may refer to the motion vector of a y-component corresponding to the bottom-right position of a current block. Meanwhile, in Equation 5, dx0 and dy0 may refer to the width and height of a current block, respectively. In addition, dx1 may refer to a horizontal distance between a current block and a top-right block, and dy1 may refer to a vertical distance between a current block and a bottom-left block. As an example, dx1 may be determined based on a difference between the width of a current block and the position of a top-right block determined through at least one of the above-described methods 2 to 5 for determining a top-right block (i.e., a RT position, a moving position in a left/right direction or a top-right reference position). dy1 may be determined based on a difference between the height of a current block and the position of a bottom-left block determined through at least one of the above-described methods 2 to 5 for determining a bottom-left block (i.e., a LB position, a moving position in a top/bottom direction or a bottom-left reference position).

Any one of the methods 1, 2 or 4 for determining top-right/bottom-left blocks may be applied when another one is not available. As an example, when a top-right/bottom-left block according to method 1 for determining top-right/bottom-left blocks does not exist or does not have motion information, a top-right/bottom-left block may be determined according to method 2 or 4 for determining top-right/bottom-left blocks. Alternatively, when a top-right/bottom-left block according to method 2 for determining top-right/bottom-left blocks does not exist or does not have motion information, a top-right/-bottom-left block may be determined according to method 1 or 4 for determining top-right/bottom-left blocks. Alternatively, when a top-right/bottom-left block according to method 4 for determining top-right/bottom-left blocks does not exist or does not have motion information, a top-right/bottom-left block may be determined according to method 1 or 2 for determining top-right/bottom-left blocks.

A plurality of derived candidates may be derived for a current block. For this purpose, a plurality of top-right blocks and a plurality of bottom-left blocks may be determined for a current block, respectively. As an example, it is assumed that the first to N-th top-right blocks and the first to N-th bottom-left blocks are determined. In this case, the i-th derived candidate may be derived based on motion information of the i-th top-right block and motion information of the i-th bottom-left block corresponding thereto ($1 \leq i \leq N$). Hereinafter, a method for determining a plurality of top-right blocks and bottom-left blocks is described in detail.

Method 1 for determining a plurality of top-right/bottom-left blocks

The top-right blocks of a current block may be determined by searching for an available block within a predetermined search range, and a plurality of bottom-left blocks may be determined based on the position of the determined top-right blocks. The search range may be from the top-right position of a current block (e.g., (W, -1)) to a top-right reference position. Specifically, while moving by a predetermined distance ($\alpha$), it is possible to check whether a coding block or a sub-block including a moving position is available. Here, a predetermined distance ($\alpha$) is the same as described in 'Method 2 for determining top-right/bottom-left blocks'. The search direction may be a right direction from the top-right position of a current block or may be a left direction from the top-right reference position of a current block.

The top-right blocks of a current block may be determined based on available blocks found during the search process. As an example, all available blocks found during the search process may be configured as top-right blocks of a current block. Alternatively, the search may be performed until a predetermined number (N) of available blocks are found, and N available blocks found during the search process may be configured as top-right blocks of a current block. Here, N is a value that is pre-defined equally for an encoding device and a decoding device, and may be an integer of 2, 3, 4 or more. Alternatively, N may be variably determined based on information signaled through a bitstream or the property of a current block (e.g., a size, a shape, an inter prediction mode, etc.).

Meanwhile, bottom-left blocks of a current block may be determined by corresponding to the position of top-right blocks determined above, respectively. The position of a bottom-left block corresponding to the position of a top-right block may be determined as described in Method 2 for determining top-right/bottom-left blocks and an overlapping description is omitted here.

Alternatively, bottom-left blocks of a current block may be determined by searching for an available block within a predetermined search range and a plurality of top-right blocks may be determined based on the position of the determined bottom-left blocks. The search range may be from the bottom-left position of a current block (e.g., (-1, H)) to a bottom-left reference position. Specifically, while moving by a predetermined distance ($\beta$), it is possible to check whether a coding block or a sub-block including a moving position is available. Here, a predetermined distance ($\beta$) is the same as described in 'Method 2 for determining top-right/bottom-left blocks'. The search direction may be a bottom direction from the bottom-left position of a current block or may be a top direction from the bottom-left reference position of a current block.

The bottom-left blocks of a current block may be determined based on available blocks found during the search process. As an example, all available blocks found during the search process may be configured as bottom-left blocks of a current block. Alternativey, the search may be performed until a predetermined number (M) of available blocks are found, and M available blocks found during the search process may be configured as top-right blocks of a current block. Here, M is a value that is pre-defined equally for an encoding device and a decoding device, and may be an integer of 2, 3, 4 or more. Alternatively, M may be variably determined based on information signaled through a bitstream or the property of a current block (e.g., a size, a shape, an inter prediction mode, etc.).

Meanwhile, top-right blocks of a current block may be determined by corresponding to the position of bottom-left blocks determined above, respectively. The position of a top-right block corresponding to the position of a bottom-left block may be determined as described in Method 2 for determining top-right/bottom-left blocks and an overlapping description is omitted here.

Method 2 for determining a plurality of top-right/bottom-left blocks

The top-right blocks of a current block may be determined by searching for an available block in a left or right direction from a determined search start position. The search start position may be the top-right reference position and/or the top-right position of a current block. Specifically, while moving by a predetermined distance ($\alpha$) from the search start position, it is possible to check whether a coding block or a sub-block including a moving position is available. Here, a predetermined distance ($\alpha$) is the same as described in 'Method 2 for determining top-right/bottom-left blocks'.

The top-right blocks of a current block may be determined based on available blocks found during the search process. As an example, all available blocks found during the search process may be configured as top-right blocks of a current block. Alternativey, the search may be performed until a predetermined number (N) of available blocks are found, and N available blocks found during the search process may be configured as top-right blocks of a current block. Here, N is a value that is pre-defined equally for an encoding device and a decoding device, and may be an integer of 2, 3, 4 or more. Alternatively, N may be variably determined based on information signaled through a bitstream or the property of a current block (e.g., a size, a shape, an inter prediction mode, etc.).

Meanwhile, the bottom-left block of a current block may be determined by searching for an available block in a bottom or top direction from a predetermined search start position. The search start position may be the bottom-left reference position and/or the bottom-left position of a current block. Specifically, while moving by the same distance ($\alpha$) from the search start position, it is possible to check whether a coding block or a sub-block including a moving position is available.

Likewise, bottom-left blocks of a current block may be determined based on available blocks found during the search process. As an example, all available blocks found during the search process may be configured as bottom-left blocks of a current block. Alternatively, the search may be performed until a predetermined number (N) of available blocks are found, and N available blocks found during the search process may be configured as bottom-left blocks of a current block.

A search direction for the top-right/bottom-left blocks is the same as described in 'Method 5 for determining top-right/bottom-left blocks', and an overlapping description is omitted here.

Method 3 for determining a plurality of top-right/bottom-left blocks

A search range for the top-right block of a current block may be divided into a plurality of sub-ranges and a search for an available block may be performed for each sub-range. Here, the search range may be from the top-right position of a current block (e.g., (W, -1)) to a top-right reference position. Alternatively, the search range may include one or more sub-ranges in a left direction from a top-right reference position and one or more sub-ranges in a right direction from a top-right reference position. A range in which the search is allowed may be limited to a current coding tree unit (CTU) to which a current block belongs, two or more coding tree units including a current coding tree unit or a coding tree unit row (CTU row) including a current coding tree unit. The sub-range is defined by L sample intervals, and L may be 4, 8, 16, 32, 64, 128 or more. L may be a value that is predefined equally for an encoding device and a decoding device or may be variably determined based on the property of a current block (e.g., a size, a shape, etc.).

Specifically, it is possible to check whether a coding block or a sub-block including a moving position is available while moving by a predetermined distance ($\alpha$) within a current sub-range. Here, a predetermined distance ($\alpha$) is the same as described in 'Method 2 for determining top-right/bottom-left blocks'. An available block found first in the search process may be configured as the top-right block of a current block. Then, a search within a current sub-range is terminated and a search within the next sub-range may be performed in the same manner. Through the above-described process, at least one top-right block may be derived for each sub-range.

Meanwhile, a search range for the bottom-left block of a current block may be divided into a plurality of sub-ranges and a search for an available block may be performed for each sub-range. Here, the search range may be from the bottom-left position of a current block (e.g., (-1, H)) to a bottom-left reference position. Alternatively, the search range may include one or more sub-ranges in a top direction from a bottom-left reference position and one or more sub-ranges in a bottom direction from a bottom-left reference position. A range in which the search is allowed may be limited to a current coding tree unit (CTU) to which a current block belongs. The sub-range may be defined by L sample intervals, which is the same as described above.

Specifically, it is possible to check whether a coding block or a sub-block including a moving position is available while moving by a predetermined distance ($\alpha$ or $\beta$) within a current sub-range. Here, a predetermined distance ($\alpha$ or $\beta$) is the same as described in 'Method 2 for determining top-right/bottom-left blocks'. An available block found first in the search process may be configured as the bottom-left block of a current block. Then, a search within a current sub-range is terminated and a search within the next sub-range may be performed in the same manner. Through the above-described process, at least one bottom-left block may be derived for each sub-range.

Method 4 for determining a plurality of top-right/bottom-left blocks

A plurality of top-right blocks may be determined based on a combination of at least two of the above-described 'methods 1 to 5 for determining top-right/bottom-left blocks'. Likewise, a plurality of bottom-left blocks may be determined based on a combination of at least two of the above-described 'methods 1 to 5 for determining top-right/bottom-left blocks'.

In determining a plurality of top-right/bottom-left blocks, a different method may be applied. As an example, a plurality of top-right blocks may be determined based on any one of the methods 1 to 4 for determining a plurality of top-right/bottom-left blocks and a plurality of bottom-left blocks may be determined based on another of the methods 1 to 4 for determining a plurality of top-right/bottom-left blocks.

The i-th top-right block/bottom-left block may be determined through at least one of the above-described methods for determining a plurality of top-right/bottom-left blocks. Based on at least one of the position or motion information of the determined i-th top-right block/bottom-left block, motion information corresponding to the bottom-right position of a current block may be derived, which may be used as motion information of the i-th derived candidate.

As an example, a motion vector corresponding to the bottom-right position of a current block may be derived as in Equation 5 described above, and a detailed description is omitted here.

The plurality of derived candidates may be added to a candidate list for predicting motion information of a current block. Alternatively, at least one of the plurality of derived candidates may be selectively added to the candidate list.

As an example, template matching-based costs may be calculated for the plurality of derived candidates and top T derived candidates may be added to the candidate list in ascending order of the calculated costs. The template matching-based cost may be defined as a sample difference between the template region of a current block and the template region of a reference block, wherein a reference block may be specified by motion information of a corresponding derived candidate. T may be an integer of 1, 2, 3 or more.

Alternatively, among a plurality of derived candidates, index information specifying at least one derived candidate added to the candidate list may be signaled. Only at least one derived candidate specified by the index information may be added to the candidate list.

In the above-described embodiment, the top-right/bottom-left block of a current block may be determined by searching for an available block. However, although an available block is found through a search, a corresponding available block may be determined as the top-right/bottom-left block of a current block based on whether motion information of a corresponding available block is the same as motion information of a spatial neighboring block of a current block.

As an example, when the available block and the spatial neighboring block have the same motion vector, there may be a limit that the available block is not determined as the top-right block (or the bottom-left block) of a current block. Alternatively, when the available block and the spatial neighboring block have the same motion vector, but have a different reference picture index, the available block may be determined as the top-right block (or the bottom-left block) of a current block. Alternatively, when the available block and the spatial neighboring block have the same motion vector and reference picture index, there may be a limit that the available block is not determined as the top-right block (or the bottom-left block) of a current block.

When there is a limit that the available block is not determined as the top-right block (or the bottom-left block) of a current block, an available block having motion information different from the spatial neighboring block may be re-searched and an available block found through the re-search may be determined as the top-right block (or the bottom-left block) of a current block.

When both an available block found in a search (or re-search) process for a top-right block and an available block found in a search (or re-search) process for a bottom-left block have the same motion vector and/or reference picture index as a spatial neighboring block, there may be a limit that corresponding available blocks are not determined as the top-right block and the bottom-left block of a current block, respectively.

There may be a case where an available block having motion information different from a spatial neighboring block was found in a search (or re-search) process for a top-right block, but an available block or an available block having motion information different from a spatial neighboring block is not found in a search (or re-search) process for a bottom-left block. In this case, a coding block or a sub-block including a position moved by a predetermined distance (d) from the bottom-left position of a current block may be determined as the bottom-left block of a current block. Here, a predetermined distance (d) may be a distance from the top-right position of a current block to a pre-determined top-right block. Alternatively, a coding block or a sub-block including the first default position that is pre-defined equally for an encoding device and a decoding device may be determined as the bottom-left block of a current block. Here, the first default position may be the left position of a current block (e.g., (-1, H-1)).

Conversely, there may be a case where an available block having motion information different from a spatial neighboring block was found in a search (or re-search) process for a bottom-left block, but an available block or an available block having motion information different from a spatial neighboring block is not found in a search (or re-search) process for a top-right block. In this case, a coding block or a sub-block including a position moved by a predetermined distance (d) from the top-right position of a current block may be determined as the top-right block of a current block. Here, a predetermined distance (d) may be a distance from the bottom-left position of a current block to a pre-determined bottom-left block. Alternatively, a coding block or a sub-block including the second default position that is pre-defined equally for an encoding device and a decoding device may be determined as the top-right block of a current block. Here, the second default position may be the top position of a current block (e.g., (W-1, -1)).

Alternatively, there may be a case where an available block or an available block having motion information different from a spatial neighboring block is not found in a search (or re-search) process for a top-right block and a bottom-left block. In this case, a coding block or a sub-block including the first default position may be determined as the bottom-left block of a current block and a coding block or a sub-block including the second default position may be determined as the top-right block of a current block.

A spatial neighboring block to be compared with the available block may include at least one of the top neighboring block or the left neighboring block of a current block. As an example, in a search process for a top-right block, an available block may be compared with a top neighboring block and may not be compared with a left neighboring block. In addition, in a search process for a bottom-left block, an available block may be compared with a left neighboring block and may not be compared with a top-right neighboring block. Alternatively, regardless of whether it is a search process for a top-right block or a search process for a bottom-left block, an available block may be compared with left and top neighboring blocks.

A derived candidate according to the present disclosure may not be added to the candidate list when the temporal candidate is available and may be added to a candidate list when the temporal candidate is not available. Alternatively, the derived candidate may be added to a candidate list as a new candidate replacing the temporal candidate. Alternatively, the derived candidate may be added to a candidate list independently of the temporal candidate, regardless of whether the temporal candidate is available. In other words, there may be a case where a temporal candidate and a derived candidate are added together to the candidate list of a current block. Alternatively, the derived candidate may be adaptively added to a candidate list based on a flag (e.g., temporal_mvp_enabled_flag) indicating whether a temporal candidate is allowed. The flag may be signaled at a high level such as a sequence parameter set, a picture parameter set, a picture header, a slice header, etc. As an example, when the flag indicates that a temporal candidate is available for a video sequence, a current picture or a current slice, the derived candidate is not added to the candidate list, and when the flag indicates that a temporal candidate is not available for a video sequence, a current picture or a current slice, the derived candidate may be added to the candidate list.

A history-based candidate may refer to a candidate having motion information of a block decoded before a current block (hereinafter, referred to as a previous block). Motion information of a previous block may be sequentially stored in a buffer having a predetermined size according to decoding order. The previous block may be a spatial neighboring block adjacent to a current block or may be a block not adjacent to a current block.

A derived candidate according to the present disclosure may be added before or after the spatial candidate of a candidate list. The derived candidate may be added between the spatial candidate and the temporal candidate of a candidate list. The derived candidate may be added between the temporal candidate and the history-based candidate of a candidate list. The derived candidate may be added after a history-based candidate.

Referring to FIG. 4, motion information of a current block may be derived based on the candidate list and a candidate index S410.

A candidate index may refer to information encoded to derive motion information of a current block. The candidate index may specify one or more candidates among a plurality of candidates belonging to a candidate list.

The motion vector of the motion information may refer to a motion vector in a block unit. Alternatively, the motion vector of the motion information may refer to a motion vector derived in the sub-block unit of a current block. For this purpose, a current block may be partitioned into a plurality of NxM sub-blocks. Here, a NxM sub-block may have a rectangular shape (N>M or N<M) or a square shape (N=M). The value of N and M may be 2, 4, 8, 16, 32 or more.

Referring to FIG. 4, inter prediction may be performed on a current block based on the derived motion information S420.

Specifically, a reference block may be specified by using motion information of a current block. The reference block may be specified for each sub-block of a current block. The reference block of each sub-block may belong to one reference picture. In other words, a sub-block belonging to a current block may share one reference picture. Alternatively, a reference picture index may be configured independently for each sub-block of a current block. The specified reference block may be configured as the prediction block of a current block.

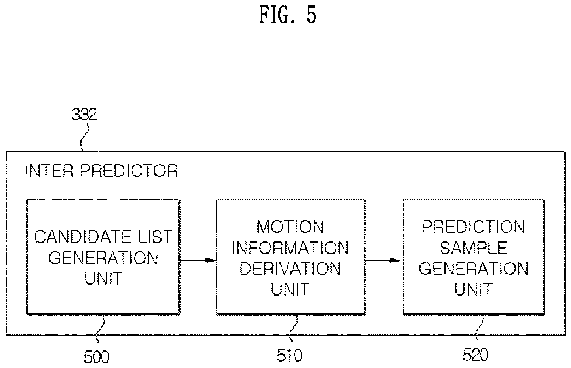

FIG. 5 shows a schematic configuration of an inter predictor 332 performing an inter prediction method according to the present disclosure.

Referring to FIG. 4, an inter prediction method performed in a decoding device was described, which may be performed in the same manner in the inter predictor 332 of a decoding device, and a detailed description is omitted below.

Referring to FIG. 5, an inter predictor 332 may include a candidate list generation unit 500, a motion information derivation unit 510 and a prediction sample generation unit 520.

A candidate list generation unit 500 may generate a candidate list for predicting/deriving motion information of a current block. The candidate list may be for a merge mode or an AMVP mode or may be for an affine merge mode or an affine inter mode. The motion information may include at least one of a motion vector, a reference picture index, inter prediction direction information or weight information for bidirectional weighted prediction.

A candidate list generation unit 500 may derive a plurality of candidates including at least one of a spatial candidate, a temporal candidate, a derived candidate or a history-based candidate and add them to a candidate list. In addition, a candidate list generation unit 500 may derive one or more derived candidates and add them to a candidate list. A method for deriving a plurality of candidates and a method for adding a plurality of candidates to a candidate list are the same as described in FIG. 4, and an overlapping description is omitted here.

A motion information derivation unit 510 may derive motion information of a current block based on the candidate list and a candidate index. Here, a candidate index is information encoded to derive motion information of a current block, and may specify one or more candidates among a plurality of candidates belonging to a candidate list.

In deriving motion information of a current block, a motion information derivation unit 510 may derive a motion vector in a block unit or may derive a motion vector in the sub-block unit of a current block. In order to derive a motion vector in a sub-block unit, a motion information derivation unit 510 may partition a current block in a unit of a NxM sub-block. Here, a NxM sub-block may have a rectangular shape (N>M or N<M) or a square shape (N=M). The value of N and M may be 2, 4, 8, 16, 32 or more.

A prediction sample generation unit 520 may perform inter prediction based on motion information obtained from a motion information derivation unit 510 to generate the prediction sample of a current block.

Specifically, a prediction sample generation unit 520 may specify a reference block by using motion information of a current block and may generate the prediction block of a current block based on the specified reference block.

Alternatively, when a motion vector in a sub-block unit is derived from a motion information derivation unit 510, a prediction sample generation unit 520 may specify a reference block for each sub-block of a current block and generate the prediction block of a current block based on the specified reference blocks. In this case, specified reference blocks may belong to one reference picture. Alternatively, a reference picture index may be configured independently for each sub-block of a current block and in this case, any one of the specified reference blocks may belong to a reference picture different from another one.

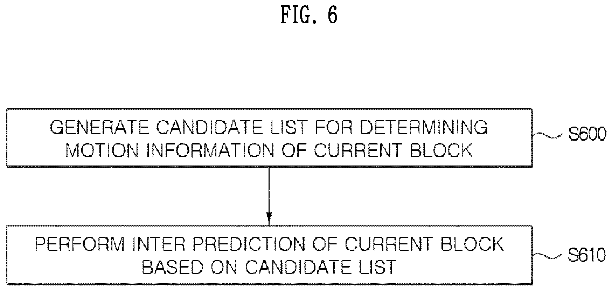

FIG. 6 shows an inter prediction method performed by an encoding device as an embodiment according to the present disclosure.

Referring to FIG. 6, a candidate list for determining motion information of a current block may be generated S600.

The candidate list may be for a merge mode or an AMVP mode or may be for an affine merge mode or an affine inter mode. The motion information may include at least one of a motion vector, a reference picture index, inter prediction direction information or weight information for bidirectional weighted prediction.

A plurality of candidates including at least one of a spatial candidate, a temporal candidate, a derived candidate or a history-based candidate may be derived and the plurality of derived candidates may be added to a candidate list. In addition, one or more derived candidates may be derived, which may be added to a candidate list. A method for deriving a plurality of candidates and a method for adding a plurality of candidates to a candidate list are the same as described in FIG. 4, and an overlapping description is omitted here.

Referring to FIG. 6, inter prediction may be performed on a current block based on a candidate list S610.

The prediction sample of a current block may be generated based on at least one optimal candidate among a plurality of candidates belonging to the candidate list.

Specifically, a reference block may be specified by using motion information of an optimal candidate among a plurality of candidates. The prediction block of a current block may be generated based on the specified reference block. Alternatively, the reference block may be specified for each sub-block of a current block and the prediction block of a current block may be generated based on the specified reference blocks. In this case, reference blocks corresponding to sub-blocks of a current block may belong to one reference picture. Alternatively, a reference picture index may be configured independently for each sub-block of a current block and in this case, any one of the specified reference blocks may belong to a reference picture different from another one.

In addition, among a plurality of candidates belonging to the candidate list, at least one optimal candidate for generating the prediction sample of the current block may be determined. A candidate index specifying the determined optimal candidate may be encoded. The encoded candidate index may be inserted into a bitstream.

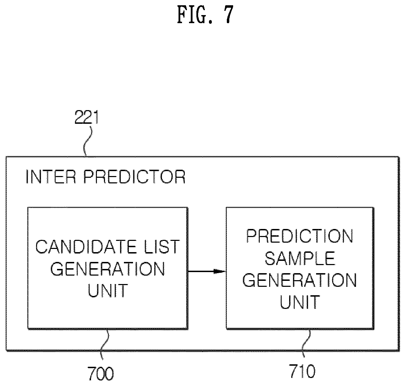

FIG. 7 shows a schematic configuration of an inter predictor 221 performing an inter prediction method according to the present disclosure.

Referring to FIG. 6, an inter prediction method performed in an encoding device was described, which may be performed in the same manner in the inter predictor 221 of an encoding device, and a detailed description is omitted below.

Referring to FIG. 7, an inter predictor 221 may include a candidate list generation unit 700 and a prediction sample generation unit 710.

A candidate list generation unit 700 may generate a candidate list for determining motion information of a current block. The candidate list may be for a merge mode or an AMVP mode or may be for an affine merge mode or an affine inter mode. The motion information may include at least one of a motion vector, a reference picture index, inter prediction direction information or weight information for bidirectional weighted prediction.

A candidate list generation unit 700 may derive a plurality of candidates including at least one of a spatial candidate, a temporal candidate, a derived candidate or a history-based candidate and add them to a candidate list. In addition, a candidate list generation unit 700 may derive one or more derived candidates and add them to a candidate list. A method for deriving a plurality of candidates and a method for adding a plurality of candidates to a candidate list are the same as described in FIG. 4, and an overlapping description is omitted here.

A prediction sample generation unit 710 may perform inter prediction on a current block based on a candidate list. The prediction sample of a current block may be generated based on at least one optimal candidate among a plurality of candidates belonging to the candidate list.

Specifically, a prediction sample generation unit 710 may specify a reference block by using motion information of an optimal candidate among a plurality of candidates and generate the prediction block of a current block based on the specified reference block. Alternatively, the reference block may be specified for each sub-block of a current block and the prediction block of a current block may be generated based on the specified reference blocks. In this case, reference blocks corresponding to sub-blocks of a current block may belong to one reference picture. Alternatively, a reference picture index may be configured independently for each sub-block of a current block and in this case, any one of the specified reference blocks may belong to a reference picture different from another one.

In addition, a prediction sample generation unit 710 may further include a motion information determination unit (not shown). A motion information determination unit may determine at least one optimal candidate for generating the prediction sample of the current block among a plurality of candidates belonging to the candidate list. In this case, an entropy encoder 240 may encode a candidate index specifying the determined optimal candidate and insert it into a bitstream.

In the above-described embodiment, methods are described based on a flowchart as a series of steps or blocks, but a corresponding embodiment is not limited to the order of steps, and some steps may occur simultaneously or in different order with other steps as described above. In addition, those skilled in the art may understand that steps shown in a flowchart are not exclusive, and that other steps may be included or one or more steps in a flowchart may be deleted without affecting the scope of embodiments of the present disclosure.

The above-described method according to embodiments of the present disclosure may be implemented in a form of software, and an encoding apparatus and/or a decoding apparatus according to the present disclosure may be included in a device which performs image processing such as a TV, a computer, a smartphone, a set top box, a display device, etc.

In the present disclosure, when embodiments are implemented as software, the above-described method may be implemented as a module (a process, a function, etc.) that performs the above-described function. A module may be stored in a memory and may be executed by a processor. A memory may be internal or external to a processor, and may be connected to a processor by a variety of well-known means. A processor may include an application-specific integrated circuit (ASIC), another chipset, a logic circuit and/or a data processing device. A memory may include a read-only memory (ROM), a random access memory (RAM), a flash memory, a memory card, a storage medium and/or another storage device. In other words, embodiments described herein may be performed by being implemented on a processor, a microprocessor, a controller or a chip. For example, functional units shown in each drawing may be performed by being implemented on a computer, a processor, a microprocessor, a controller or a chip. In this case, information for implementation (ex. information on instructions) or an algorithm may be stored in a digital storage medium.

In addition, a decoding apparatus and an encoding apparatus to which embodiment(s) of the present disclosure are applied may be included in a multimedia broadcasting transmission and reception device, a mobile communication terminal, a home cinema video device, a digital cinema video device, a surveillance camera, a video conversation device, a real-time communication device like a video communication, a mobile streaming device, a storage medium, a camcorder, a device for providing video on demand (VoD) service, an over the top video (OTT) device, a device for providing Internet streaming service, a three-dimensional (3D) video device, a virtual reality (VR) device, an argumente reality (AR) device, a video phone video device, a transportation terminal (ex. a vehicle (including an autonomous vehicle) terminal, an airplane terminal, a ship terminal, etc.) and a medical video device, etc., and may be used to process a video signal or a data signal. For example, an over the top video (OTT) device may include a game console, a blu-ray player, an Internet-connected TV, a home theater system, a smartphone, a tablet PC, a digital video recorder (DVR), etc.

In addition, a processing method to which embodiment(s) of the present disclosure are applied may be produced in a form of a program executed by a computer and may be stored in a computer-readable recording medium. Multimedia data having a data structure according to embodiment(s) of the present disclosure may be also stored in a computer-readable recording medium. The computer-readable recording medium includes all types of storage devices and distributed storage devices that store computer-readable data. The computer-readable recording medium may include, for example, a blu-ray disk (BD), an universal serial bus (USB), ROM, PROM, EPROM, EEPROM, RAM, CD-ROM, a magnetic tape, a floppy disk and an optical media storage device. In addition, the computer-readable recording medium includes media implemented in a form of a carrier wave (e.g., transmission via the Internet). In addition, a bitstream generated by an encoding method may be stored in a computer-readable recording medium or may be transmitted through a wired or wireless communication network.

In addition, embodiment(s) of the present disclosure may be implemented by a computer program product by a program code, and the program code may be executed on a computer by embodiment(s) of the present disclosure. The program code may be stored on a computer-readable carrier.

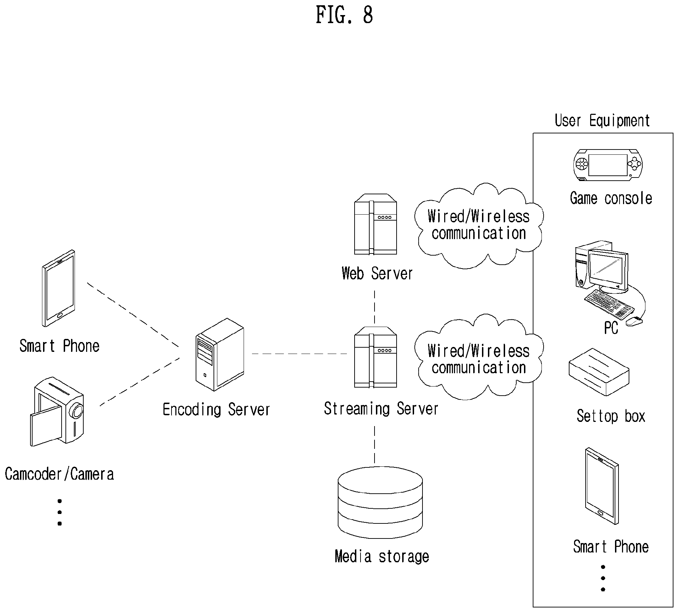

FIG. 8 shows an example of a contents streaming system to which embodiments of the present disclosure may be applied.

Referring to FIG. 8, a contents streaming system to which embodiment(s) of the present disclosure are applied may largely include an encoding server, a streaming server, a web server, a media storage, a user device and a multimedia input device.

The encoding server generates a bitstream by compressing contents input from multimedia input devices such as a smartphone, a camera, a camcorder, etc. into digital data and transmits it to the streaming server. As another example, when multimedia input devices such as a smartphone, a camera, a camcorder, etc. directly generate a bitstream, the encoding server may be omitted.

The bitstream may be generated by an encoding method or a bitstream generation method to which embodiment(s) of the present disclosure are applied, and the streaming server may temporarily store the bitstream in a process of transmitting or receiving the bitstream.

The streaming server transmits multimedia data to a user device based on a user's request through a web server, and the web server serves as a medium to inform a user of what service is available. When a user requests desired service from the web server, the web server delivers it to a streaming server, and the streaming server transmits multimedia data to a user. In this case, the contents streaming system may include a separate control server, and in this case, the control server controls a command/a response between each device in the content streaming system.

The streaming server may receive contents from a media storage and/or an encoding server. For example, when contents is received from the encoding server, the contents may be received in real time. In this case, in order to provide smooth streaming service, the streaming server may store the bitstream for a certain period of time.

An example of the user device may include a mobile phone, a smart phone, a laptop computer, a digital broadcasting terminal, a personal digital assistants (PDAs), a portable multimedia players (PMP), a navigation, a slate PC, a Tablet PC, an ultrabook, a wearable device (e.g., a smartwatch, a smart glass, a head mounted display (HMD), a digital TV, a desktop, a digital signage, etc.

Each server in the contents streaming system may be operated as a distributed server, and in this case, data received from each server may be distributed and processed.

The claims set forth herein may be combined in various ways. For example, a technical characteristic of a method claim of the present disclosure may be combined and implemented as a device, and a technical characteristic of a device claim of the present disclosure may be combined and implemented as a method. In addition, a technical characteristic of a method claim of the present disclosure and a technical characteristic of a device claim may be combined and implemented as a device, and a technical characteristic of a method claim of the present disclosure and a technical characteristic of a device claim may be combined and implemented as a method.

**Claims**

1. An image decoding method, comprising:

    generating a candidate list of a current block;
    deriving motion information of the current block based on one of a plurality of candidates belonging to the candidate list; and
    performing inter prediction for the current block based on the motion information of the current block,
    wherein the plurality of candidates includes at least one of a spatial candidate, a temporal candidate, or a derived candidate,
    wherein motion information of the derived candidate is derived based on at least one of a top-right block of the current block or a bottom-left block of the current block.

2. The image decoding method of claim 1, wherein the top-right block of the current block is a block including a top-right reference position,

    wherein the bottom-left block of the current block is a block including a bottom-left reference position, and
    wherein the top-right reference position and the bottom-left reference position are determined based on at least one of a width or a height of the current block.

3. The image decoding method of claim 1, wherein the top-right block of the current block is a block including a first position moved by a predetermined first distance in a left or right direction from a top-right reference position,

   wherein the bottom-left block of the current block is a block including a second position moved by a predetermined second distance in a bottom or top direction from a bottom-left reference position, and
   wherein the first position and the second position are positioned on a same straight line.

4. The image decoding method of claim 1, wherein the top-right block of the current block is a block including a first position moved by a predetermined distance in a left or right direction from a top-right reference position, wherein the bottom-left block of the current block is a block including a second position moved by the predetermined distance in a bottom or top direction from a bottom-left reference position.

5. The image decoding method of claim 4, wherein the predetermined distance is adaptively determined based on a size of the current block.

6. The image decoding method of claim 4, wherein a search direction for determining the at least one of the top-right block or the bottom-left block is determined based on whether a width of the current block is greater than a height of the current block.

7. The image decoding method of claim 1, wherein the at least one of the top-right block or the bottom-left block is determined by searching for an available block having motion information different from at least one of a left block or a top block of the current block.

8. The image decoding method of claim 1, wherein a search range for determining the at least one of the top-right block or the bottom-left block is divided into a plurality of sub-ranges, and
   wherein the derived candidate is derived for each of the plurality of sub-ranges.

9. The image decoding method of claim 1, wherein the derived candidate is adaptively added to the candidate list based on whether the temporal candidate is available for the current block.

10. The image decoding method of claim 1, wherein the temporal candidate has motion information of a temporal neighboring block corresponding to the current block, and
    wherein the temporal neighboring block is specified based on motion information derived based on the at least one of the top-right block or the bottom-left block.

11. An image encoding method, comprising:

    generating a candidate list of a current block;
    performing inter prediction for the current block based on one of a plurality of candidates belonging to the candidate list,
    wherein the plurality of candidates includes at least one of a spatial candidate, a temporal candidate, or a derived candidate,
    wherein motion information of the derived candidate is derived based on at least one of a top-right block of the current block or a bottom-left block of the current block.

12. A computer readable storage medium storing a bitstream generated by an image encoding method according to Claim 11.

13. A method for transmitting data for image information, comprising:

    generating a candidate list of a current block wherein a plurality of candidates belonging to the candidate list includes at least one of a spatial candidate, a temporal candidate, or a derived candidate, and motion information of the derived candidate is derived based on at least one of a top-right block of the current block or a bottom-left block of the current block;
    generating a prediction block of the current block based on one of the plurality of candidates;
    generating a bitstream by encoding the current block based on the prediction block; and

transmitting the data including the bitstream.

FIG.1

FIG.2

# FIG.3

FIG.4

| | |
|---|---|
| GENERATE CANDIDATE LIST<br>FOR MOTION INFORMATION PREDICTION<br>OF CURRENT BLOCK | S400 |
| DERIVE MOTION INFORMATION<br>OF CURRENT BLOCK<br>BASED ON CANDIDATE LIST AND CANDIDATE INDEX | S410 |
| PERFORM INTER PREDICTION<br>OF CURRENT BLOCK<br>BASED ON MOTION INFORMATION | S420 |

FIG. 5

FIG. 6

GENERATE CANDIDATE LIST FOR DETERMINING
MOTION INFORMATION OF CURRENT BLOCK  ~ S600

PERFORM INTER PREDICTION OF CURRENT BLOCK
BASED ON CANDIDATE LIST  ~ S610

FIG. 7

221

INTER PREDICTOR

| CANDIDATE LIST GENERATION UNIT | → | PREDICTION SAMPLE GENERATION UNIT |

700

710

FIG. 8

## INTERNATIONAL SEARCH REPORT

| International application No. |
| --- |
| **PCT/KR2023/009329** |

### A. CLASSIFICATION OF SUBJECT MATTER

**H04N 19/513**(2014.01)i; **H04N 19/105**(2014.01)i; **H04N 19/176**(2014.01)i; **H04N 19/132**(2014.01)i; **H04N 19/139**(2014.01)i

According to International Patent Classification (IPC) or to both national classification and IPC

### B. FIELDS SEARCHED

Minimum documentation searched (classification system followed by classification symbols)

H04N 19/513(2014.01); H04N 19/103(2014.01); H04N 19/105(2014.01); H04N 19/109(2014.01); H04N 19/11(2014.01); H04N 19/132(2014.01); H04N 19/137(2014.01); H04N 19/139(2014.01); H04N 19/176(2014.01); H04N 19/52(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 후보(candidate), 목록(list), 움직임(motion), 인터(inter), 예측 (predict), 탐색(search)

### C. DOCUMENTS CONSIDERED TO BE RELEVANT

| Category* | Citation of document, with indication, where appropriate, of the relevant passages | Relevant to claim No. |
| --- | --- | --- |
| X | KR 10-2020-0017406 A (QUALCOMM INCORPORATED) 18 February 2020 (2020-02-18) See paragraphs [0025], [0033], [0052], [0063]-[0066], [0080], [0084], [0123]-[0125], [0159], [0164], [0173], [0185]-[0186] and [0261]; claim 1; and figures 7 and 16. | 1-5,7-13 |
| Y | | 6 |
| Y | KR 10-2020-0125733 A (TENCENT AMERICA LLC) 04 November 2020 (2020-11-04) See paragraphs [0128] and [0130]. | 6 |
| X | WO 2020-004879 A1 (LG ELECTRONICS INC.) 02 January 2020 (2020-01-02) See paragraphs [0045], [0084]-[0085] and [0156]-[0157]; claims 1 and 10; and figure 3. | 1-2,11-13 |
| X | KR 10-2020-0128582 A (TENCENT AMERICA LLC) 13 November 2020 (2020-11-13) See paragraphs [0025], [0029], [0070], [0088]-[0089], [0102] and [0143]; claim 1; and figures 2-3, 8 and 10. | 1-2,11-13 |

✓ Further documents are listed in the continuation of Box C.    ✓ See patent family annex.

| | Special categories of cited documents: | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **04 October 2023** | **05 October 2023** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/009329**

### C.    DOCUMENTS CONSIDERED TO BE RELEVANT

| Category* | Citation of document, with indication, where appropriate, of the relevant passages | Relevant to claim No. |
|---|---|---|
| X | KR 10-2021-0025539 A (BEIJING BYTEDANCE NETWORK TECHNOLOGY CO., LTD. et al.) 09 March 2021 (2021-03-09)<br>    See paragraphs [0031], [0074]-[0088], [0105], [0123], [0199]-[0211], [0403] and [0454]; and figures 1, 9, 26 and 36. | 1-2,11-13 |

Form PCT/ISA/210 (second sheet) (July 2022)

# INTERNATIONAL SEARCH REPORT
## Information on patent family members

International application No.

**PCT/KR2023/009329**

| Patent document cited in search report | | | Publication date (day/month/year) | Patent family member(s) | | | Publication date (day/month/year) |
|---|---|---|---|---|---|---|---|
| KR | 10-2020-0017406 | A | 18 February 2020 | CN | 110754086 | A | 04 February 2020 |
| | | | | EP | 3639519 | A1 | 22 April 2020 |
| | | | | EP | 3639519 | B1 | 16 August 2023 |
| | | | | JP | 2020-523853 | A | 06 August 2020 |
| | | | | US | 11218723 | B2 | 04 January 2022 |
| | | | | US | 2022-0070486 | A1 | 03 March 2022 |
| | | | | WO | 2018-231700 | A1 | 20 December 2018 |
| KR | 10-2020-0125733 | A | 04 November 2020 | CN | 111971965 | A | 20 November 2020 |
| | | | | EP | 3791590 | A1 | 17 March 2021 |
| | | | | JP | 2021-517788 | A | 26 July 2021 |
| | | | | JP | 7055485 | B2 | 18 April 2022 |
| | | | | KR | 10-2487359 | B1 | 10 January 2023 |
| | | | | US | 11503327 | B2 | 15 November 2022 |
| | | | | US | 2020-0077114 | A1 | 05 March 2020 |
| | | | | WO | 2019-217093 | A1 | 14 November 2019 |
| WO | 2020-004879 | A1 | 02 January 2020 | None | | | |
| KR | 10-2020-0128582 | A | 13 November 2020 | CN | 111903126 | A | 06 November 2020 |
| | | | | CN | 111903126 | B | 19 April 2022 |
| | | | | EP | 3818702 | A1 | 12 May 2021 |
| | | | | JP | 2021-519039 | A | 05 August 2021 |
| | | | | JP | 7085021 | B2 | 15 June 2022 |
| | | | | KR | 10-2480934 | B1 | 23 December 2022 |
| | | | | US | 10531090 | B1 | 07 January 2020 |
| | | | | US | 2020-0084450 | A1 | 12 March 2020 |
| | | | | WO | 2020-009872 | A1 | 09 January 2020 |
| KR | 10-2021-0025539 | A | 09 March 2021 | CN | 110677669 | A | 10 January 2020 |
| | | | | CN | 110677669 | B | 07 December 2021 |
| | | | | EP | 3815376 | A1 | 05 May 2021 |
| | | | | JP | 2023-018000 | A | 07 February 2023 |
| | | | | JP | 7181395 | B2 | 30 November 2022 |
| | | | | US | 11463685 | B2 | 04 October 2022 |
| | | | | US | 2021-0029374 | A1 | 28 January 2021 |
| | | | | WO | 2020-008353 | A1 | 09 January 2020 |

Form PCT/ISA/210 (patent family annex) (July 2022)